Europäisches Patentamt

European Patent Office

Office européen des brevets

(19)

(11) EP 0 604 671 B1

(12) **EUROPÄISCHE PATENTSCHRIFT**

(45) Veröffentlichungstag und Bekanntmachung des Hinweises auf die Patenterteilung:
**26.05.1999 Patentblatt 1999/21**

(51) Int Cl.6: **F24D 12/02**, F28D 21/00

(21) Anmeldenummer: **92121784.0**

(22) Anmeldetag: **28.12.1992**

(54) **Vorrichtung zur Ausnutzung der Rauchgas- bzw. Abgaswärme**

A device for the exploitation of the heat of flue or exhaust gases

Dispositif pour l'exploitation de la chaleur des fumées resp. des gaz d'échappement

(84) Benannte Vertragsstaaten:
**AT BE CH DE DK ES FR GB GR IE IT LI LU MC NL PT SE**

(43) Veröffentlichungstag der Anmeldung:
**06.07.1994 Patentblatt 1994/27**

(73) Patentinhaber: **Caruso, Anton A.**
**D-66440 Blieskastel (DE)**

(72) Erfinder: **Caruso, Anton A.**
**D-66440 Blieskastel (DE)**

(56) Entgegenhaltungen:
**DE-A- 2 056 825**      **DE-A- 2 912 241**
**DE-A- 2 912 986**      **DE-A- 3 000 179**
**FR-A- 2 261 487**

Bemerkungen:
Die Akte enthält technische Angaben, die nach dem Eingang der Anmeldung eingereicht wurden und die nicht in dieser Patentschrift enthalten sind.

**Beschreibung**

Heizanlagen:

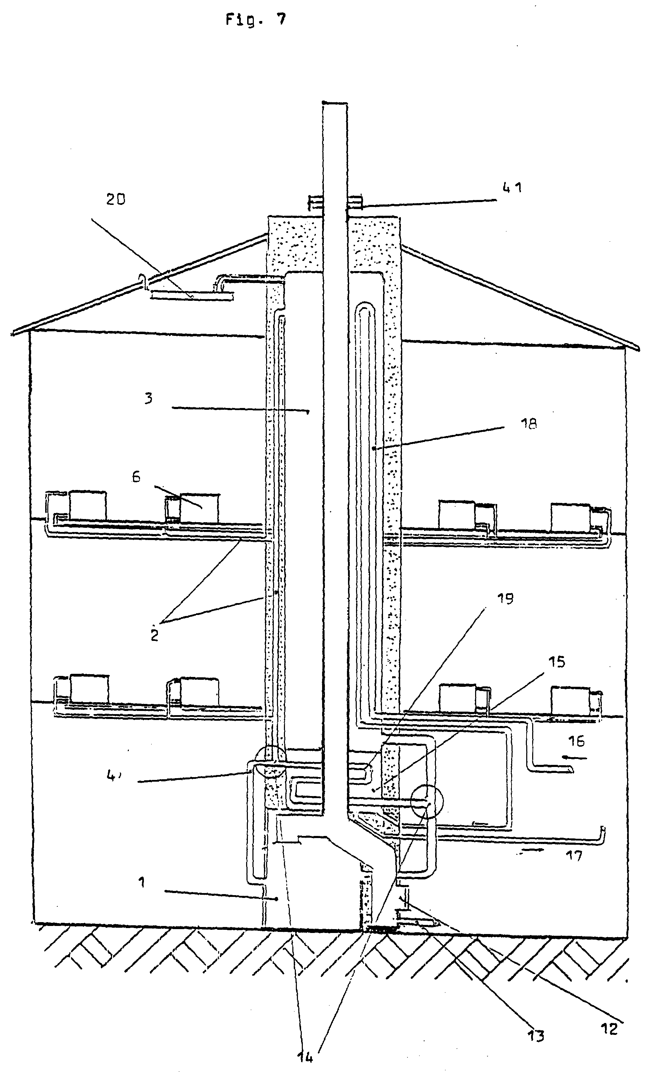

Der Erfindung liegt der Zweck zugrunde, in einfacher Weise und möglichst ohne den Verbraucher mit Mehrkosten gegenüber herkömmlicher Bauweise zu belasten, Energie zu sparen und die Umwelt zu schützen.
In der DE-A-2 912 986 ist eine Vorrichtung zur Ausnutzung der Abgaswärme beschrieben. Aufgabe der Erfindung ist die Wärme der Rauch- bzw. Abgase bestmöglichst zu nutzen. Dieses Ziel wird erfindungsgemäß durch den Gegenstand des einzigen Patentanspruchs erreicht.
Der Heizkessel kann für Heizöl,Gas oder Festbrennstoffe ausgelegt sein.Der Heizkessel wärmt das Heizungswasser auf ca. 70° C und fördert es mitteis der Heizungsumwälzpumpe kontinuierlich in den Heizungsvorlauf (siehe Fig. 7.).
Die Heizungsumwälzpumpe bewirkt eine Zirkulation des Wassers im Kessel-Heizungsvorlauf- Heizungsrücklauf-Kessel, wobei das ankommende abgekühlte Wasser im Kessel immer wieder auf ca. 70° C aufgewärmt wird (je nach Einstellung) Der Rauchgasstutzen des Heizkessels mündet in den Kondensationskatalysator. Die heißen Rauchgase geben bei der Strömung nach oben durch den Kondensationskatalysator den größten Teil ihres Wärmeinhaltes an das im Doppelmantel des Kondensationskatalysators befindliche Wasser ab. Dieses Wasser im Doppelmantel ist gleichzeitig der Heizungsrücklauf, so daß der Heizkessel bereits dadurch aufgewärmtes Rücklaufwasser bekommt und hierbei über das Thermostat gesteuert, der Brenner abschaltet, wenn das Wasser somit schneller seine Vorlauftemperatur von ca. 70° C erreicht hat.
Energie-Einsparung der dadurch erreichten längeren Stillstandszeiten des Brenners.
Durch die Wärmeabgabe der Rauchgase im Doppelmantel wird die Temperatur der Rauchgase(Abgase) gesenkt und erreichen an der Mündung nur noch 30°-50° C.
Die Einregulierung des Brenners erfolgt unter diesem Gesichtspunkt. Der Heizöl-oder Gasbrenner wird im Betrieb so eingestellt, daß die Mündungstemperatur zwischen 30° und 50° C liegt. Diese Temperaturen liegen deutlich unter der Taupunkttemperatur von 54° C. Das dampfförmig vorliegende Wasser sowie Schadstoffe in den heißen Rauchgasen (insbesondere bei Gasbefeuerung) kondensiert bei dieser Temperatur ab 54° C und tiefere Temperatur gemeinsam auch mit diversen Schadstoffen zum Kondensat, daß im Rauchgasableitungsrohr im Kondensationskatalysator Nach unten abläuft und am unterem Ende abgenommen werden kann. Bei diesem Vorgang entsteht aber durch erneute Verdampfung des im Kondensat enthaltenen Wassers die Latentwärme. Somit wird eindrucksvoll die sog. Brennwerttechnik zusätzlich zur direkten Wärmerückgewinnung aus den Abgasen genutzt. Insbesondere bei Erdgasbefeuerung ergeben sich Wärmeverlust-Einsparungen wie folgt:

```
Wärmeverluste   o h n e   Brennwerttechnik =

                Abgasverlust: 10  %
                Latentwärme : 10,2%
                ------------------
                Gesamtverlust:20,2%
```

```
Wärmeverluste   m i t   Brennwertnutzung
und Abgaskühlung auf 30° C          =

                Latentwärme  : 2  %
                Abgaswärme   : 0,6%
                ------------------
                Gesamtverlust: 2,6%
```

Berechnungsgrundlage: "Siegertsche Formel" in %

$$= \frac{f \times t_A - t_R}{CO_2}$$

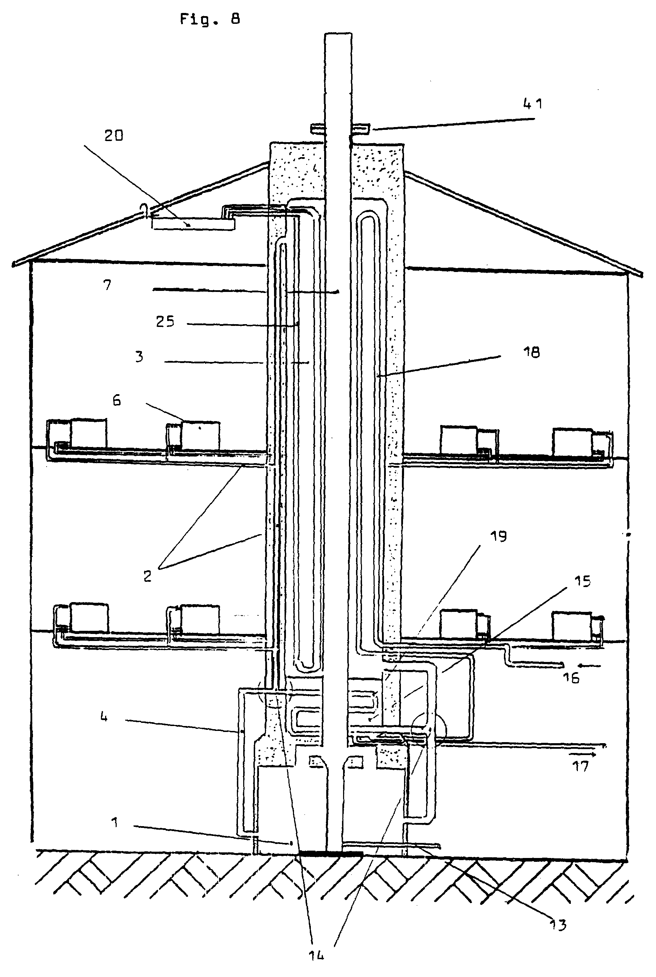

Der untere Teil des Kondensationskatalysators ist als Heizkesselanlage ausgebildet.
Die Rauchgasstutzen vom Heizkessel an dem Kondensationskatalysator befinden sich somit mit der Einlassöffnung im Innern vertikal zum Brennraum(Fig.7,8 u.9). Die gesamte Heizanlage eines Gebäudes erfährt bei Verwendung des Kondensationskatalysatores mit integriertem Heizkessel und Warmwasserboiler als Heizungsanlage eine enorme Vereinfachung als Ganzes, eine enorme Vereinfachung der Gesamtinstallation.( Wegfall von Steigsträngen, Warmwasserboileranschlüsse, Kesselaufbau usw.) und damit eine große

Anschaffungseinsparung zusätzlich der Energie-Einsparung und des Umweltschutzes. Bezüglich des Funktionsprinzipesfolgende Ausführungen (siehe Fig.7 und 8 ):

Im integrierten Heizkessel schwankt bei Feststoff- Verbrennung die RauchgasrohrMündungstemperatur bei offener Verbrennungsluftklappe aus feuertechnischen Gründen ( z.B. viel oder wenig Festbrennstoff im Brennraum). Die Anlage ist am besten für Gas- oder Heizölbetrieb geeignet.

Sie funktioniert aber auch mit FestbrennstoffHeizkessel.

Bei Betrieb der Anlage mit Heizöl oder Gas jedoch ist diese Temperatur fast immer gleich, weil immer die gleiche eingestellte Brennstoffmenge zugeführt wird.

Der integrierte Heizkessel wird wie der externe geregelt durch das Regel-und Sicherheitsthermostat.

Dieses Thermostat reagiert auf die heißeste Stelle der Wassertemperatur im Heizkessel. Wird die Heizungsvorlauftemperatur erreicht, so öffnet das Thermostat und der Heizkessel wird abgeschaltet. Das Thermostat schließt und schaltet somit den Heizkessel wieder ein, wenn sich das Wasser um ca. 4° C abgekühlt hat.

Bei Gas-oder Heizölbrennstoff erfolgt diese Regelung durch Ein-und Ausschalten des Brenners. Bei Festbrennstoffen durch öffnen und Schließen der Verbrennungsluftklappe. Die Heizungsumwälzpumpe läuft aber weiter.

Beim Abschalten wird zugleich eine dichtschließende Rauchgasabsperrklappe betätigt. Diese sitzt zwischen Kesselaustritt und Rauchgasableitungsrohr eintritt. Diese Vorrichtung bewirkt, daß der Kondensationskatalisator nicht durch Luftzug gekühlt wird.

Desweiteren wird das Ausströmen heißer Rauchgase aus dem Kessel verhindert.

Dadurch kann die Temperatur im Heizkessel, im Vor-und Rücklauf länger auf hohem Niveau gehalten werden.Es entsteht gewollt ein Wärmestau.

Ein Heizungssicherheitsventil am Kessel öffnet bei Überschreiten eines bestimmten Wasserdruckes im Kessel und lässt Heißwasser ab. Gleichzeitig wird über eine Wasserzulaufeinrichtung kaltes Wasser in das System eingeführt. Das Heizungsausdehnugsgefäß nimmt infolge Wärmeausdehnung im Doppelmantel, Volumina auf.

Beim Überschreiten einer Temperatur von 97° C im Heizungsvorlauf setzt ein Sicherheitsventil als thermische Ablaufsicherung ein. Über der im Kondensationskatalysator integrierten Heizkesselanlage befindet sich der Warmwasserboiler, der direkt dem Bereich der heiß entweichenden Abgase ausgesetzt ist und somit Warmwasser allein schon durch diese Abgaswärme produziert,die andernfalls verloren wäre.

Während des Sommerbetriebes sind die Zweiwegeventile (über Regelung) geschlossen, so daß kein Warmwasser in den Heizungs= vorlauf und somit zu den Heizkörpern gelangt (Fig. 7 u.8).

Das Heißwasser, welches der Heizkessel produziert, wird durch Wärmetauscher, die sich im Warmwasserboiler befinden, hindurchgeführt und heizen somit ebenfalls das im Warmwasserboiler befindliche Brauchwasser auf. Während also der Brenner bewirkt, daß Heißwasser im Heizkessel produziert wird, heizen die Abgase hierzu parallel das Wasser im gesamten Doppelmantel auf, am stärksten natürlich im Bereich des Warmwasserboilers. Bereits hieraus ergibt sich eine hohe Effizienz. Desweiteren erwärmt sich aber auch das über dem Warmwasserboiler im Doppelmantel befindliche Wasser.

Hier befinden sich Wärmetauscher in Form lammelierter Rohrleitungssträge vertikal durch den gesamten restlichen Doppelmantel.

Der Eintritt der Wärmetauscher in das erwärmte Wasser im Doppelmantel ist der Kaltwasserzulauf. Das kalte Leitungswasser erwärmt sich in diesen Wärmetauschern und wird als Zulauf in den Warmwasserboiler eingespeist.

Eine weitere Nutzung der ansonsten verlorenen Wärme, denn der Heizkessel einerseits, mit seinen Wärmetauschern sowie die Abgaswärme für den Warmwasserboiler andererseits, heizen nunmehr bereits vorgewärmtes Wasser (30° - 40° C), auf ca.50°C-60°C anstatt kaltes Leitungswasser von etwa 13 bis 15° C. Darüberhinaus kann der Kondensationskatalisator mit integriertem Heizkessel und Warmwasserboiler, mit Solaranlage ausgerüstet werden.

Die Anschlüsse dafür sind in jedem Falle bereits vorhanden sowie der Pufferspeicher (Doppelmantel).

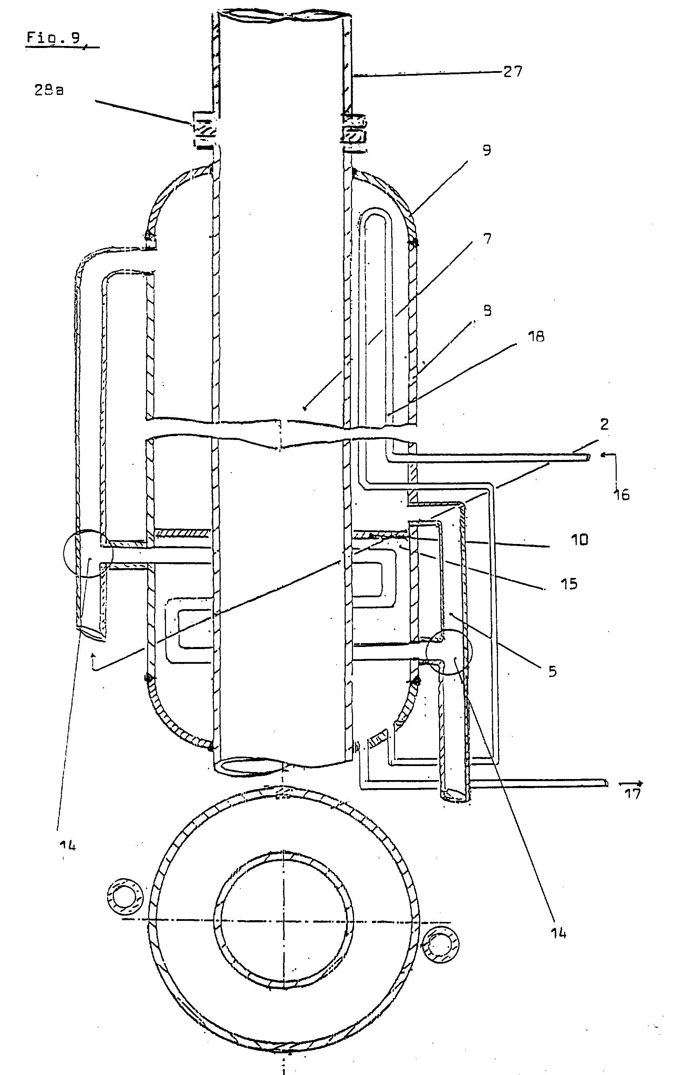

Außerdem entfallen sämtliche Verrohrungen zu einem Speicher im Keller, weil die Zuleitungen zwischen Solaranlage und Pufferspeicher direkt unter dem Dach des betreffenden Gebäudes an den Doppelmantel angeschlossen werden. Hieraus ergeben sich, insbesondere bei Sommer betrieb,kostenlose Wärmeenergien mittels Wärmetauscher (ebenfalls im Doppelmantel) die das Wasser dort aufheizen und der Brauchwasserbereitung zugutekommen über die Wärmetauscher als Zulauf für Kaltwasser (Fig. 9).

Im Winterbetrieb wird über Thermostatregelung und überströmventil die eingestellte Brauchwassertemperatur im Boiler dadurch gehalten, indem überflüssige Wärme im Boiler in die darüberliegende Heizwasserkammer abgegeben wird. Während der Heizperiode sind über Regelung die Heizungsvorlauf und Heizungsrück= laufleitungen geöffnet.Nunmehr wird der Heiz= ungsvorlauf mit Warmwasser gespeist,während die Abgase parallel dazu das im Doppelmantel befindliche Rücklaufwasser heizen.

Gleichzeitig ist wie im Sommerbetrieb die Produktion des warmen Brauchwassers gewährleistet.

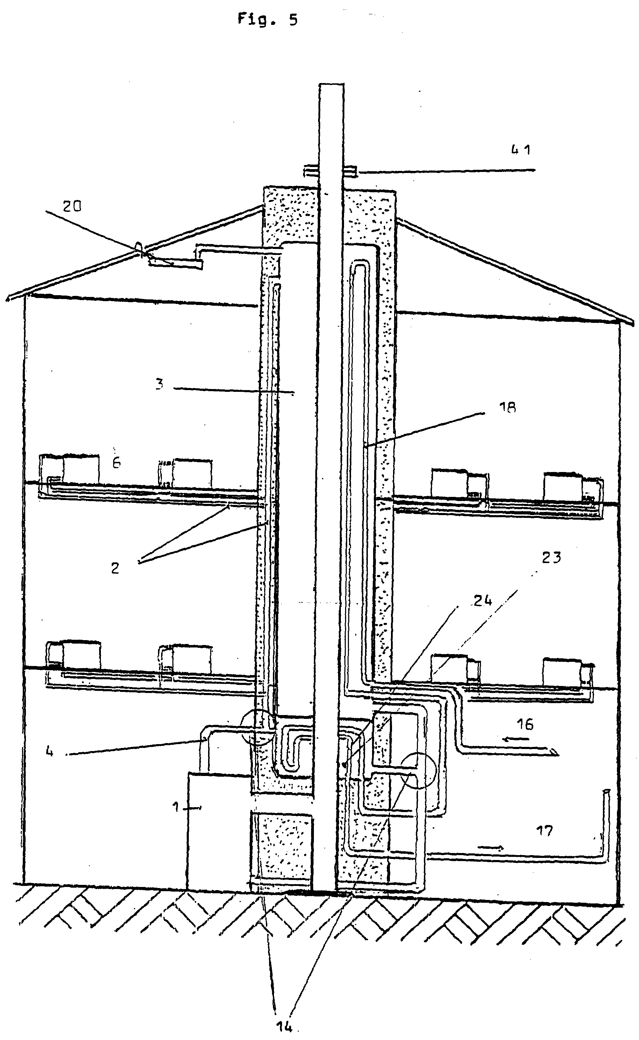

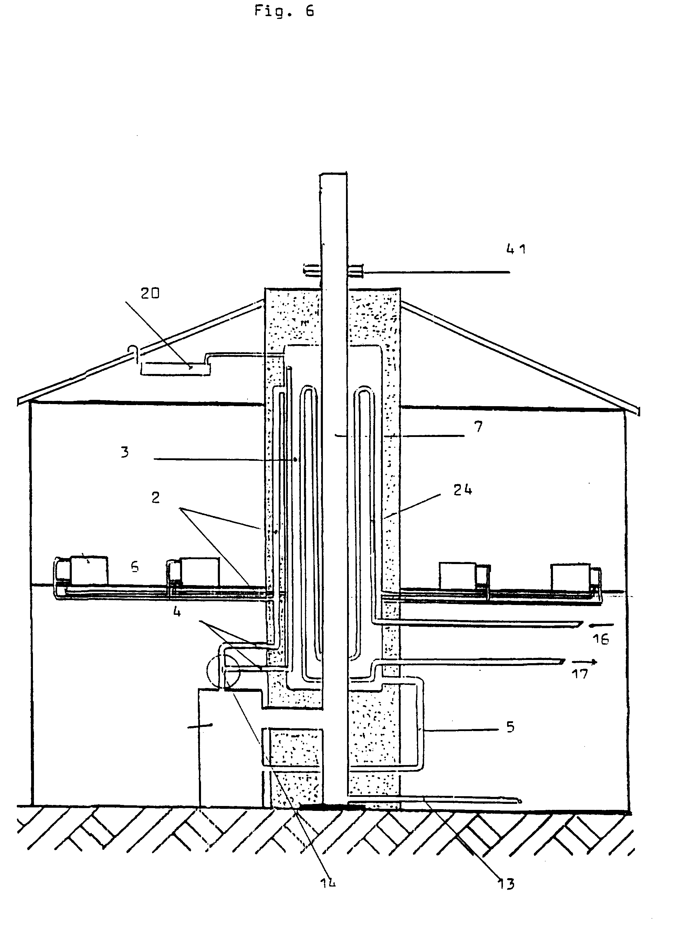

Je nach baulichen Gegebenheiten und Ansprüche des Verbrauchers hinsichtlich der Brauchwasserbereitung oder Verwendung eines externen Heizkessels kann die Brauchwasserbereitung auch als Durchlauferhitzer im Warmwasserboiler oder bei kleineren Anlagen im gesamten Doppelmantel (Fig.6) ausgelegt werden (Fig.5).

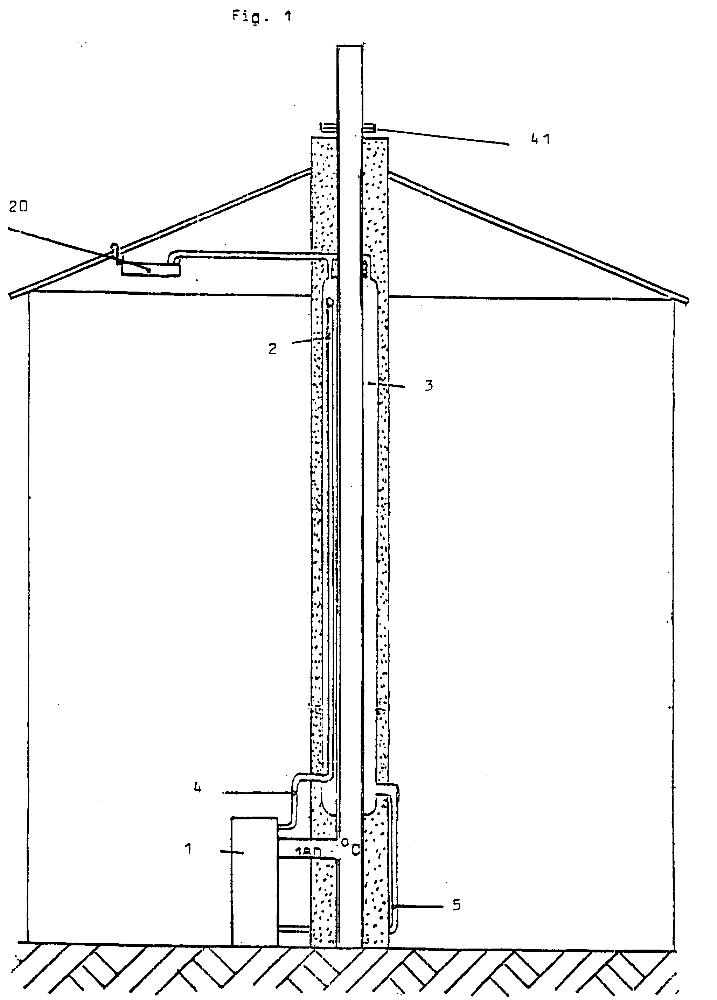

Bei Schornsteinsanierungen kann der Kondensationskatalysator nach Fig.1 Anwendung finden.

Da in der Regel bei Sanierungen die Heizungsverteilung bereits mit sämtlichen Anschlüssen im Heizungskeller vorhanden sind, kann der Heizungsvorlauf innerhalb des Doppelmantels verlaufen. Einerseits deshalb, weil bei der Installation in den meisten Fällen der ursprüngliche gemauerte Schornstein als Aufnahme des Kondensationskatalisatores verwendet wird und beim Einbringen mit einem Kran von oben die am Doppelmantel außen angebrachte Heizungsvorlaufleitung erheblich stören würde.

Anderenseits ist es beim Sanierungsbau in der Regel nicht erforderlich,mit den Zuleitungen der Heizkörper an den Doppelmantel zu gehen um sie dort anzuschließen. Wie vorerwähnt, sie sind bereits im Heizungskeller vorhanden, in den meisten Fällen auch der Warmwasserboiler.

In diesen Fällen kann der Doppelmantel jedoch auch mit Wärmetauscher für Kaltwasservorlauf ausgerüstet werden.

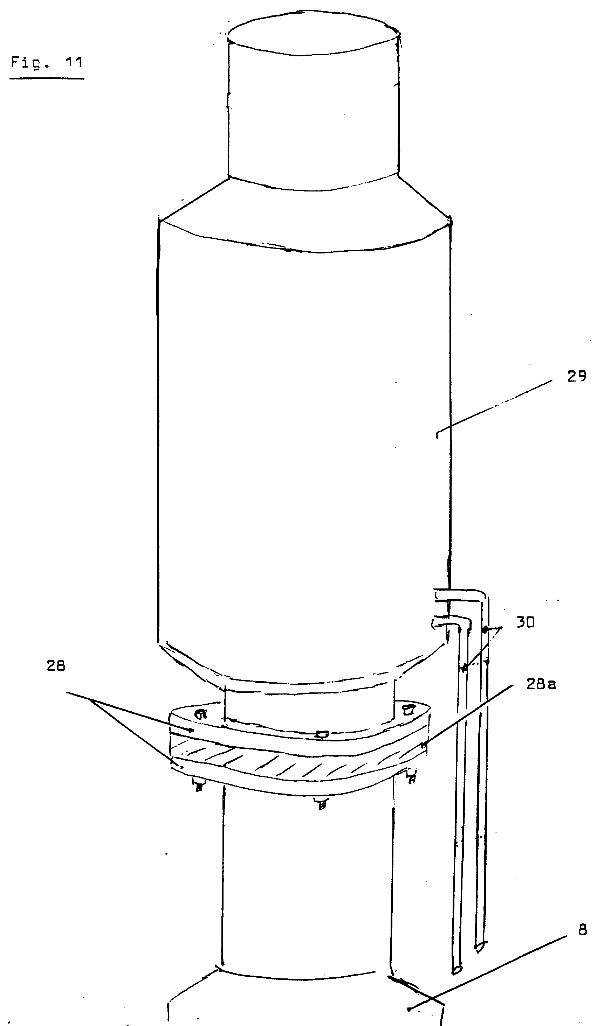

Das an der Mündung befindliche angeflantschte Endstück der Rauchrohres am Kondensationskatalysator ist das Kernstück der Anlage als eigentliches Kondensationsgerät. Durch den Flantsch wird das heiße Rauchrohr am Endstück (Mündung) thermisch getrennt durch einer Scheibe aus feuerfesten nicht leitendem Material. Dadurch wird einerseits bewirkt, daß keine Kälte über das Abgasrohr von der Mündung her nach unten übertragen werden kann, zum anderem aber eine Kühlung der Abgase unter dem Taupunkt in jedem Fall gewährleistet ist. Das wird bei Anlagen (z.B. Verbrennungsanlagen oder Anlagen im Heizungsbereich mit hoher Abgaswärmeentwicklung oder bei Verbrennungsmotoren, stationär oder in Kraftfahrzeugen) dadurch erreicht,indem das angeflatsnchte Mündungs= stück des Rauchrohres über Kühlflüssigkeit ( oder Kühlwasser)in einer gesonderten Ummantelung gekühlt wird, über Thermostat geregelt und einem Kühlgerät, welches aus der überflüssigen Abwärme als Energiequelle betrieben werden kann. (Fig. 11).

Mit dieser Technik kondensieren im jedem Fall die Wasseranteile und Schadstoffe die auch bei Erfordernis aus dem Kondensationsgerät (angeflantschtes Mündungsstück) direkt entnommen werden können (seperater Ablauf kann angebracht werden). Insbesondere betrifft das Industrieanlagen bzw. Verbrennungsanlagen für schadstoffhaltige Materialien.

Im normalen Heizungsbereich ist damit die Nutzung der Brennwerttechnik für alle Heizperioden gewährleistet, wobei in der Regel diese Anlage im normalem Heizungsbereich auch ohne extra Kühlung des Kondensationsgerätes unter den Taupunkt kommt. Insbesondere deshalb, weil der angeflantschte Mündungsteil in der Heizperiode, also der kalten Jahreszeit der kalten Außentemperatur ausgesetzt ist und der heiße untere Teil des Rauchrohres vom oberem thermisch getrennt ist.

Verbrennungsmotoren:

Die Erfindung erfüllt ihren Zweck ebenso bei Verbrennungsmotoren, insbesondere in Kraftfahrzeugen zur Schadstoffreduzierung und bei stationären Motoren ebenfalls als Wärmerückgewinnung nach dem Prinzip der Heizungsanlagen.

Bei Verbrennungsmotoren wird der gesamte Kondensationskatalysator gekühlt.Er enthält Wasser oder Kühlflüssigkeit im Mantelrohr.

Er wird ebenfalls über einen Flantsch vom Auspuff getrennt mit feuerfester, nicht leitenter Dichtscheibe. Die sich in der Ummantelung befindliche Kühlflüssigkeit oder Wasser wird über Kühler,Thermostat und bei Bedarf über zusätzliches Kühlgerät so abgekühlt, daß die Abgase unter der Taupunkttemperatur liegen. Die gesamte Auspuffanlage einschschlieslich des Kondensationskatalysators kann diverse Bauarten, je nach Beschaffenheit des Kraftfahrzeuges oder des stationären Verbrennungsmotors aufweisen.

Der Kondensationskatalysator kann bereits am Flammenrohr geflantscht werden. Er besteht ebenfalls aus V4A-Rohr, 3 bis 4mm Wandung. Die mit Druck entweichenden Auspuffgase bei Verbrennungsmotoren prallen innerhalb des Kondensationskatalysators auf Stahlscheiben die sich mit äußeren Ringöffnungen quer zur Austrittsöffnung in diversen Abständen befinden.

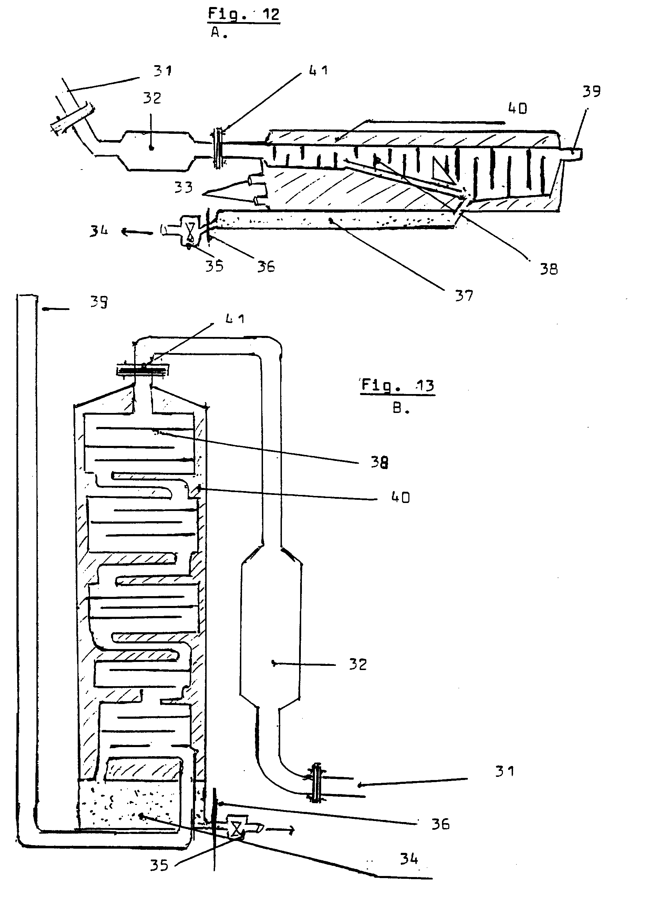

Das Abgas-bzw. Auspuffrohres des Kondensationskatalysators hat vom Flantsch her bis zum Ende jeweils mehrfach größeren Durchmesser, wobei bei Anlagen die als Auspuff längs wie nach bisheriger Anordnung eines Auspuffes nach hinten unter dem Fahrzeug verlaufen die Durchmesservergrößerung nur nach unten ausgerichtet ist (Fig. 12).

Angefallenes Kondensat wird sich demzurfolge im letzten verdicktem Teil des Kondensationskatalysators befinden. Es wird von dort mittels einer Pumpe in ein Plastikbehälter gepumpt und kann später (neutralisiert) entsorgt werden. Bei Auspuffanlagen, die (z.B. Lkw) senkrecht angeordnet sind, kann der größte Durchmesser des im Kondensationskatalisators befindlichem Abgas-bzw. Auspuffrohres am unterem Teil sein. Fig. 13 .

Der Kondensationskatalysator für stationären Verbrennungsmotoren besteht im weseltlichen aus den gleichen Teilen wie für die Konzeption Heizungen und ihren Varianten.

Bei Verbrennungsmotoren im Kfz. ebenfalls, jedoch als Variante unter Wegfall heizungstechnischer Komponenten.

Stand der Technik hinsichtlich Verbrennungs= motoren:

Herkömmliche Katalysatoren zur Schadstoffreduzierung nach herkömmlichem

Funktionsprinzipien sind kostenintensiv und störungsanfällig. Fahrzeuge mit diesen herkömmlichen Katalysatoren dürfen zum Starten nicht angeschoben werden.

Bei Fehlzündungen werden sie defekt und fallen aus. Es darf nur ein bestimmter Kraftstoff(Benzin-bleifrei) zum Betreiben von Fahrzeugen mit herkömmlichen

Katalysator benutzt werden. Herkömmliche Katalysatoren sind nicht für Dieselmotoren geeignet.

Der Kondensationskatalysator mit integriertem Heizkessel und Warmwasserboiler besteht im Wesentlichem aus folgenden Teilen:

1 Abgasrohr aus Edelstahl mit 4mm Wandung

1 Mündungsflantschrohr aus Edelstahl

1 Kühlaggregat (von Fall zu Fall)

1 Dicht-bzw, Isolationsring am Flantsch

1 Mantelrohr aus Stahl (ST 37) 4 bis 5,6mm Wandung,je nach Gesamtgröße der Anlage

2 Klöpperböden

1 Edelstahlzwischenboden (oberer Teil des Warmwasserboilers)

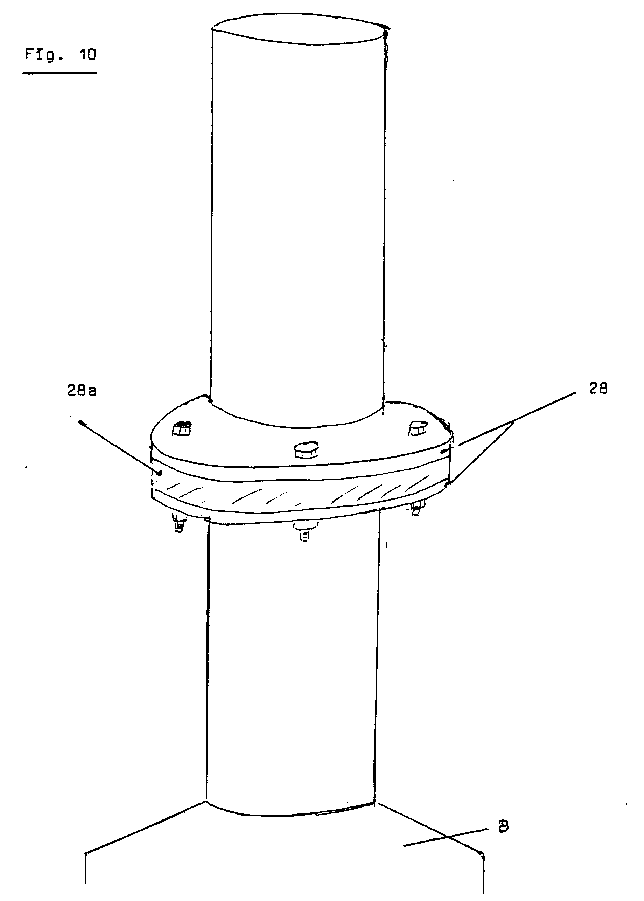

1 Stck. Mantelrohr 3-4mm Edelstahl (Hauptmantel des Warmwasserboilers (Fig.10)

1 Heizkesselanlage (integriert im unterstem Teil).

1 Heizungsvorlauf mit Zweiwegeventil

1 Heizungsrücklaufrohr mit Zweiwegeventil Desweiteren : Anschlüsse für Wärmepumpe,für Solaranlage, für Elekroheizpatronen (für Notheizung), Anschlüsse für Wasserführende Kachelöfen/Kamine, sämtliche Anschlüsse für Heizungsvorläufe der Heizkörper.

Sicherheitsventile, Thermostate, Umwälzpumpe.

Das Einbringen des Kondensationskatalysators in das betreffende Gebäude ist in der Regel nur mittels eines Kranes möglich. Weiterhin ist es im Sanierungsbereich nicht immer möglich, den Kondensationskatalysator in den vorhandenen gemauerten Schornstein einzubringen, da in diversen Fällen der Innenumfang unter 24 cm Qeuerschnitt liegt. In diesen Fällen muß der Kondensationskatalysator entweder an die Außenwand montiert werden oder mittels Deckendurchsprüche neben den vorhandnen gemauerten Schornstein angebracht werden.

Durch den Einsatz des Kondensationskatalysators mit seinem integriertem Pufferspeicher eröffnen sich neue, vorher nur mit hohem Kostenaufwand zu realisierende Möglichkeiten. Bei der Verwendung von Sonnenkollektoren mussten in der Vergangenheit Wasserspeicher von 500 bis 600 ltr. Inhalt installiert werden. Diese Zusatzkomponente entfällt bei Einsatz der Erfindung, da dieser Speicher bereits im Kondensationskatalysator enthalten ist.

Auch die Montagekosten für die Solaranlage werden um ein Vielfaches reduziert.

Ähnlich verhält es sich im Zusammenhang mit der Erfindung im Bezug auf die Wärmepumpen.

Bei Verbrennungsmotoren ergibt sich die kostengünstige und universelle Anwendung.

Bei industriellen Großanlagen ersetzt die Erfindung aufwändige Schadstoff-Filter.

Bezugnehmend auf den Stand der Technik hinsichtlich Heizkessel mit Brennwertnutzuung sei erklärt, daß diese Anlagen nur mit Primär-Energie(Elektrizität) zu betreiben sind.

Sie sind wegen des Mangels an Auftrieb im Abzug abhängig von einem Abzugsventilator.

Desweiteren sind sie sehr teuer, doppelter Preis gegenüber atmosphärische Kessel, die aber in Verbindung mit dem Kondensationskatalysator betrieben werden können.

Desweiteren wird die Abgaswärme weniger als bei vorliegender Erfindung genutzt.

Ein Abgasrohr müssen diese Heizkessel mit Brennwerttechnik ohnehin haben.

Außerdem müssen wie bei allen herkömmlichen Heizungen Steigstränge montiert werden.

Pufferspeicher wie im Kondensationskatalysator ist nicht vorhanden. Solaranlagen können nicht damit im Sinne der Beschreibung vorliegender Erfindung unter Wegfall wichtiger Zusatzkomponente betrieben werden.

Brennwertheizkessel arbeiten nur bei Verwendung von Gas als Brennstoff.

Im übrigen bedeutet das Betreiben eines zusätzlichen Ventilators Energieverlust.

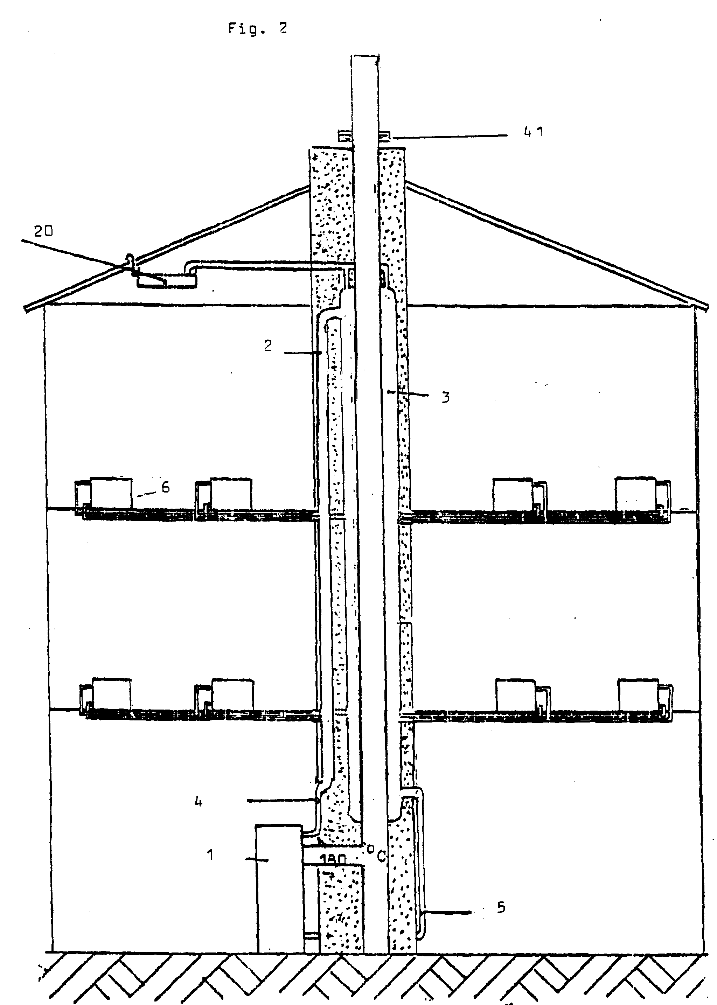

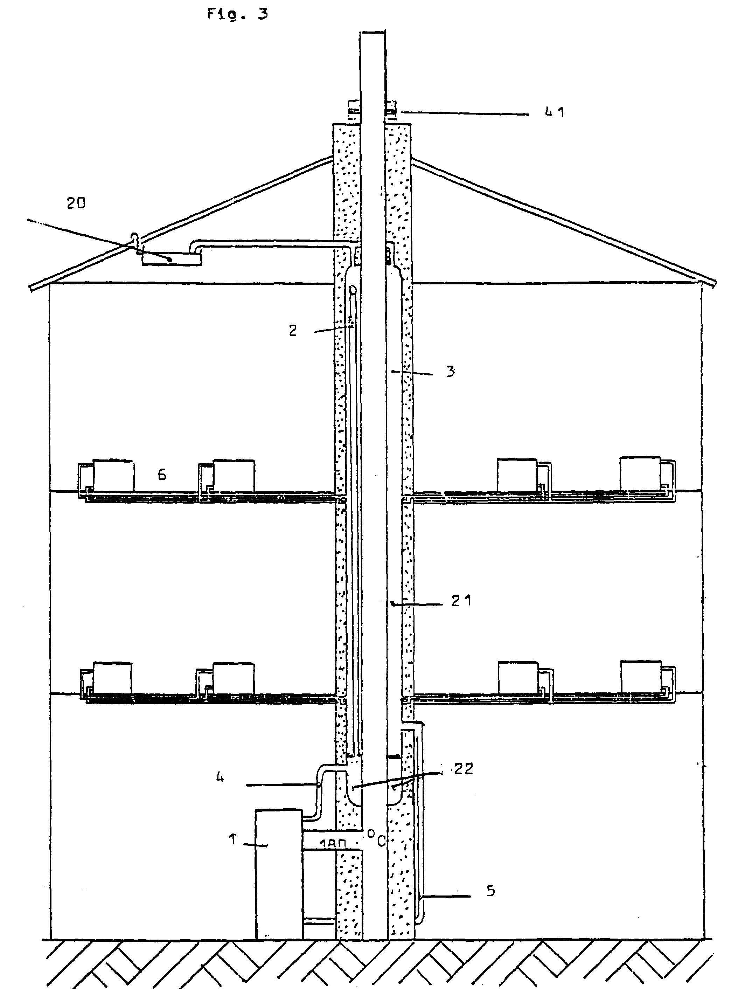

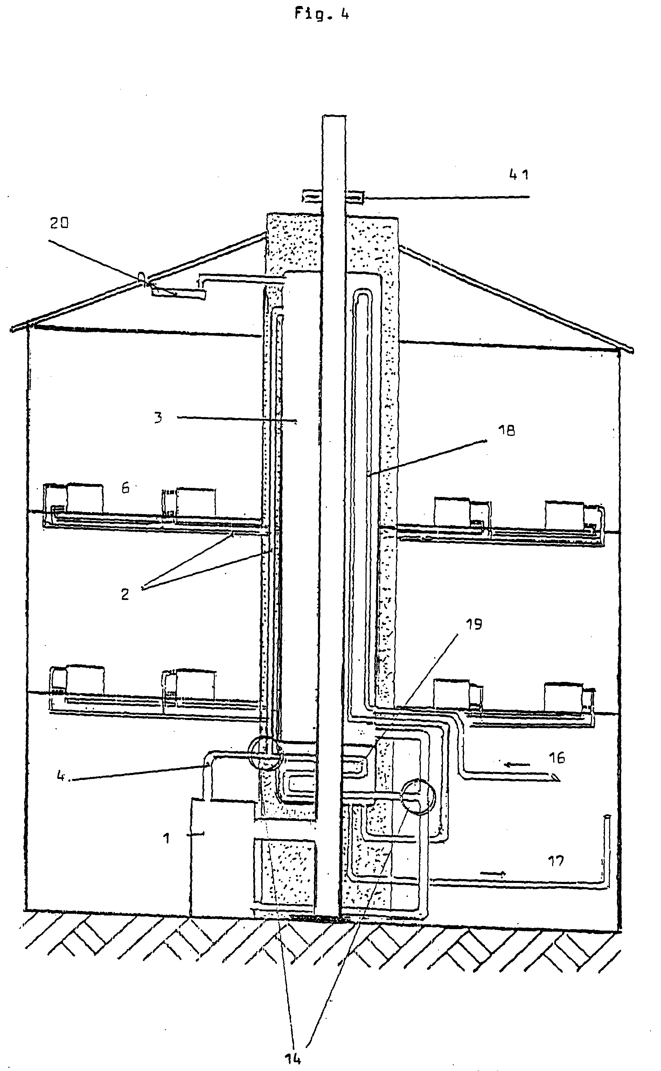

BEIBLATT zu Fig. 1 bis 13

| | | |
|---|---|---|
| 1 | Heizkessel/Brenner |
| 2 | Heizungsvorlauf |
| 3 | Heizungsrücklauf |
| 4 | Kesselvorlauf |
| 5 | Kesselrücklauf |
| 6 | Heizkörper |
| 7 | Rauchrohr |
| 8 | Mantelrohr |
| 9 | oberer Klöpperboden |
| 10 | mittlerer Klöpperboden |
| 11 | unterer Klöpperboden |
| 12 | Putzklappe |
| 13 | Kondensatablauf |
| 14 | Regelung/Zweiwegeventil |
| 15 | Boiler |
| 16 | Frischwasser/Kaltwasserzulauf für Boiler |
| 17 | Brauchwasser/warm |
| 18 | Wärmetaucher für Brauchwasservorwärmung |
| 19 | Wärmetauscher im Boiler |
| 20 | Anschluss für Solarkallektoren |
| 21 | zweite blasserkammer |
| 22 | erste Wasserkammer |
| 23 | Brauchwasser-Erhitzer |
| | ( geschlossener Heizwasserkreislauf) |
| 24 | Wärmetauscher für Brauchwasser |
| | ( Durchlauferhitzung ) |
| 25 | Wärmetauscher für Sonnenkollektoren |
| 26 | thermische Trennung mit Isolierdichtscheibe |
| 27 | Kühlung atmosphärisch ( oder bei Ummantelung mit Kühlaggregat ) |
| 28 | Flantsch |
| 28a | Isolier-Dichtscheibe-thermische Trennung |
| 29 | gekühlter Wassermantel (od. kühlflüssigkeit) mit Kühlaggregat (Kondensator) |
| 30 | Anschlüsse für Kühlaggregat |
| 31 | Flammenrohr |
| 32 | Auspufftopf |
| 33 | Anschlüsse für kühlflüssigkeit |
| 34 | Anschluss zum Sammenbehälter |
| 35 | Pumpe |
| 36 | Absperrvorrichtung |
| 37 | Kondensatsammler |
| 38 | Prallscheiben |
| 39 | Auspuff |
| 40 | Wasserkühlung oder kühlflüssigkeit |
| 41 | Flantsch für thermische Trennung mit Isolier-Dichtscheibe |
| A. | waagrechte Versin |
| B. | senkrechte Version |

**Patentansprüche**

1. Vorrichtung zur Ausnutzung der Rauchgas- bzw. Abgaswärme bei Feuerungsanlagen mit Öl/Gasgebläsebrennern oder mit Festbrennstoff-Feuerstellen oder bei Verwendung von Verbrennungsmotoren, wobei die Vorrichtung einen Kondensationskatalysator zur Ausnutzung der Latentwärme enthält, indem die heißen Rauchgase bzw. Abgase bei der Strömung durch den Kondensationskatalysator Wärme an in einem Doppelmantel befindliches Heizwasser übertragen, dadurch gekennzeichnet, daß der Kondensationskatalysator durch eine Flanschverbindung mit dem Abgasrohr (27) der Feuerungsanlage bzw. dem Auspuff (39) des Verbrennungsmotors verbunden ist, und daß sich zwischen den Flanschen der Flanschverbindung zum Zwecke der thermischen Trennung eine Isolierscheibe (28a,41) aus feuerfestem, nicht leitendem Material befindet.

## Claims

1. Preparation for the utilization of waste gas heat and latent heat contained in the fum of

   - fuel oil/gas burners or
   - furnaces for solid combustible or
   - combustion engines

   The preparation contains a catalyst of condensation using the latent heat by transporting this heat (contained in the fumes and the waste gas heat that pass through the catalyst) into the water of the heating system which flows between a double wall. Characteristic for the preparation is

   - that the catalyst of condensation is connected with a flange to the chimnay of the burner, the furnace or the combustion engine and

   - that an isolation dic of refraktory and non-conducting material is placed between the flange connection in order to achieve a thermic separation.

## Revendications

1. Mécanisme pour utilisation de la chaleur des gaz respectivement des gaz d'échappement

   - des bruleurs de gaz ou de mazout (à la base de vaporisation)
   - ou des appareils de chauffage aux combustibles solides
   - ou des moteurs à explosion.

   Le mécanisme comprend un catalyseur à condensation utilisant la chaleur latente pour transporter la chaleur des fumées et des gaz d'échappement (qui passent le catalyseur à condensation) à l'eau de chauffage qui coule entre une paroi double.
   Le mécanisme se caractérise par le fait que le catalyseur à condensation est raccorde avec une bride avec le tuyau d'échappement des gaz de l'appareil de chauffage respectivement avec l'échappement du moteur à explosion et par le fait qu'un disque isolant au matériel refractair et non-conductible se trouve entre les brides du raccordement des brides au but d'une séparation thermique.

Fig. 1

Fig. 2

Fig. 3

Fig. 4

Fig. 5

Fig. 6

Fig. 7

Fig. 8

Fig.9

28a

27

9

7

8

18

2

16

10

15

5

14

14

17

Fig. 10

28a

28

8

Fig. 11

29

30

28

28a

8

Fig. 12
A.

Fig. 13
B.

19